# EUROPEAN PATENT APPLICATION

(11) **EP 4 840 652 A1**
(43) Date of publication of application: **18.11.2026**
(21) Application number: 25738826.4
(22) Date of filing: 08.01.2025
(51) Int. Cl.: B60C 23/04, G06K 19/077, H04W 4/80, H01Q 1/22, H01Q 1/40, H04B 1/3822

(54) **TIRE COMPRISING PLURALITY OF ELECTRONIC DEVICES**

(30) Priority: 09.01.2024 KR 20240003368; 18.03.2024 KR 20240037089
(71) Applicant: HANKOOK TIRE & TECHNOLOGY CO., LTD, Gyeonggi-do 13494 (KR)
(72) Inventor: SO, Soon-Hong, Daejeon 34127 (KR)
(74) Representative: Stöckeler, Ferdinand
(86) International application number: PCT/KR2025/000359
(87) International publication number: WO 2025/150859

(57) **Abstract**

The present disclosure relates to a tire including a plurality of electronic devices, and more particularly, to a tire including a plurality of electronic devices designed to achieve more accurate transmission and reception of information by taking into account the structure of the tire, the permittivity of the materials thereof, and other relevant factors. In order to achieve the above objects, a configuration of the present disclosure provides a tire including a plurality of electronic devices, the tire comprising: a plurality of electronic devices disposed inside the tire; and a reader unit disposed outside the tire, wherein at least one of the electronic devices is disposed at any one of an inner portions, an inner surface, and an outer surface of a sidewall of the tire, and at least another one of the electronic devices is disposed on an inner liner surface of the tire.

## Description

### [TECHNICAL FIELD]

The present disclosure relates to a tire including a plurality of electronic devices, and more particularly, to a tire including a plurality of electronic devices designed to achieve more accurate transmission and reception of information by taking into account the structure of the tire, the permittivity of the materials thereof, and other relevant factors.

The present disclosure also relates to a tire including a plurality of electronic devices installed in consideration of a tire radio frequency constant (TRFC), so as to ensure accurate transmission of information while simultaneously improving durability.

### [BACKGROUND ART]

In recent years, as the development of technologies such as connected vehicles and autonomous vehicles has increased, RFID tires, electronic tires, intelligent tires, and similar products, in which electronic devices are attached to or embedded in tires, have been developed and commercialized.

Such intelligent tires are designed to measure tire-related information, process the measured information, and deliver the information to users.

Various wireless transmission methods are used to deliver such information.

In particular, the electronic devices installed in intelligent tires are designed with electronic chips and antennas tailored to the frequency and recognition range desired by individual consumers, and information transmitted at various frequencies can be acquired depending on the circuit design of the receiving end.

Typically, the transmission frequency is designed with reference to the permittivity of air; however, since the permittivity of air is substantially 1, it is common practice to design the transmission frequency and the reception frequency to be identical to each other.

However, depending on the installation position of the electronic device, the conditions of the compound, the tire structure, the sidewall thickness, and the air layer differ, and the permittivity also varies according to such changes in conditions.

Such variations in permittivity modulate the transmission frequency, causing a problem in that the accuracy of the information is reduced.

Accordingly, in the related art, the transmission frequency has been designed to be higher in order to achieve accurate data transmission; however, since it was not specifically known how much higher the transmission frequency should be designed, there was a problem in that the reliability of the information was reduced.

### <CITATION LIST>

(Patent Document 1) U.S. Patent No. 7,319,380

### [DETAILED DESCRIPTION OF THE INVENTION]

### [TECHNICAL PROBLEM TO BE SOLVED]

An object of the present disclosure, which is intended to solve the above problems, is to provide a tire including a plurality of electronic devices designed to achieve more accurate transmission and reception of information by taking into account the structure of the tire, the permittivity of the materials thereof, and other relevant factors.

Another object of the present disclosure is to provide a tire including a plurality of electronic devices installed in consideration of a tire radio frequency constant, so as to ensure accurate transmission of information while simultaneously improving durability.

The technical problems to be solved by the present disclosure are not limited to the technical problems mentioned above, and other technical problems not mentioned herein will be clearly understood by those of ordinary skill in the art to which the present disclosure pertains from the following description.

### [TECHNICAL SOLUTION]

In order to achieve the above objects, a configuration of the present disclosure provides a tire including a plurality of electronic devices, the tire comprising: a plurality of electronic devices disposed inside the tire; and a reader unit disposed outside the tire, wherein at least one of the electronic devices is disposed at any one of an inner portions, an inner surface, and an outer surface of a sidewall of the tire, and at least another one of the electronic devices is disposed on an inner liner surface of the tire.

In an embodiment of the present disclosure, a transmission frequency of the electronic device may be designed by applying a tire radio frequency constant (TRFC) derived using, as variables, a combination of one or more of the permittivity, the compound composition, the thickness, and the number of overlapping layers of structures located on a straight line between the electronic device and the reader unit.

In an embodiment of the present disclosure, the tire radio frequency constant may include, as variables, the compound of the sidewall, the thickness of the sidewall, the material of a carcass cord, the compound of the carcass cord, the thickness of the carcass cord, the number of layers of the carcass cord, the compound of a bead filler, the thickness of the bead filler, the compound of a rim cushion, the thickness of the rim cushion, the compound of the inner liner, and the thickness of the inner liner.

In an embodiment of the present disclosure, the tire radio frequency constant may be derived by the following equation: $\begin{matrix}TRFC = α \sqrt{\left(SWC\times SWT\right)} + β \sqrt{\left(CCM\times CCC\times CCT\times CCN\right)} + γ \sqrt{\left(BFC\times BFT\right)} + \\ δ \sqrt{\left(RCC+RCT\right)} + ε \sqrt{\left(ILC\times ILT\right)}\end{matrix}$ (wherein SWC is a compound coefficient of the sidewall, SWT is a thickness coefficient of the sidewall, α is a correction coefficient of the sidewall, CCM is a material coefficient of a carcass cord, CCC is a compound coefficient of the carcass cord, CCT is a thickness coefficient of the carcass cord, CCN is the number of overlapping layers of the carcass cord, β is a correction coefficient of the carcass cord, BFC is a compound coefficient of a bead filler, BFT is a thickness coefficient of the bead filler, γ is a correction coefficient of the bead filler, RCC is a compound coefficient of a rim cushion, RCT is a thickness coefficient of the rim cushion, δ is a correction coefficient of the rim cushion, ILC is a compound coefficient of the inner liner, ILT is a thickness coefficient of the inner liner, and ε is a correction coefficient of the inner liner)

In an embodiment of the present disclosure, the transmission frequency of the electronic device located at any one of the inner portions, the inner surface, and the outer surface of the sidewall of the tire may be designed by multiplying a target reception frequency by the tire radio frequency constant.

In an embodiment of the present disclosure, a secondary tire radio frequency constant may be calculated by multiplying a value primarily designed by further including, as variables, the physical properties of a tread, the thickness of the tread, and a belt thickness in the tire radio frequency constant, by the ratio of the reception frequency received at the reader unit to the transmission frequency transmitted from the electronic device.

In an embodiment of the present disclosure, the transmission frequency of the electronic device disposed on the inner liner surface of the tire may be designed by multiplying the target reception frequency by the secondary tire radio frequency constant.

In an embodiment of the present disclosure, for the electronic device located at any one of the inner portions, the inner surface, and the outer surface of the sidewall of the tire, when a point where a bead wire meets bead wire rubber is defined as a first point, a point corresponding to an end of the bead filler is defined as a second point, and a point corresponding to ends of the carcass and the belt is defined as a third point, the electronic device may be installed, when positioned between the first point and the second point, at a position corresponding to 10% to 80% of the length from the first point to the second point, starting from the first point, and may be installed, when positioned between the second point and the third point, at a position corresponding to 15% to 95% of the length from the second point to the third point, starting from the second point.

In an embodiment of the present disclosure, for the electronic device disposed on the inner liner surface of the tire, when a point at which a straight line drawn from one end of a first belt to the inner liner surface meets the inner liner is defined as a fourth point, and a point at which a straight line drawn from the other end of the first belt to the inner liner surface meets the inner liner is defined as a fifth point, the electronic device may be disposed between the fourth point and the fifth point.

In an embodiment of the present disclosure, the reception frequency of the electronic device located at any one of the inner portions, the inner surface, and the outer surface of the sidewall of the tire may be provided in a band of 800 to 960 MHz, and the reception frequency of the electronic device disposed on the inner liner surface of the tire may be provided in a band of 300 to 450 MHz or 2.3 to 2.6 GHz.

In an embodiment of the present disclosure, the transmission frequency may be designed to be 1.03 times or more, or 0.97 times or less, of the target reception frequency, which is the intended reception frequency.

In an embodiment of the present disclosure, the tire may further comprise a pairing unit configured to pair and synchronize the IDs or product information of the plurality of electronic devices, wherein the electronic device may be installed at a position of the tire where the tire radio frequency constant is within a preset target range.

In an embodiment of the present disclosure, the plurality of electronic devices may be configured to store and transmit at least one of a manufacturer, product information, and a serial number among tire information, and the plurality of electronic devices may be configured to share at least one or more pieces of information among the tire information.

In an embodiment of the present disclosure, the electronic device may be installed at a position corresponding to 110% to 150% of the total length of the bead filler with respect to the point corresponding to the end of the bead filler.

In an embodiment of the present disclosure, the electronic device may be installed at a position 41 to 60 mm toward the belt from the point where the bead wire meets the bead wire rubber.

### [ADVANTAGEOUS EFFECTS OF THE INVENTION]

According to the configuration of the present disclosure as described above, since the transmission frequency of the electronic device is designed in consideration of the position at which information is desired to be read, the structure of the tire, the permittivity according to the materials, and the like, an optimal recognition distance can be provided.

In addition, since the value of the reception frequency falls within the error range of the target reception frequency, the information is not modulated or corrupted, and the reliability of the information can be improved.

In addition, since the electronic device is disposed at a position where stress is minimized, the possibility of damage occurring during driving can be reduced.

The effects of the present disclosure are not limited to the effects described above, and should be understood to include all effects that can be inferred from the configuration of the disclosure described in the detailed description or the claims of the present disclosure.

### [BRIEF DESCRIPTION OF THE DRAWINGS]

FIG. 1 is an exemplary view of an electronic device according to an embodiment of the present disclosure.
FIGS. 2 and 3 are exemplary views showing positions of the electronic device and a reader unit according to an embodiment of the present disclosure.
FIGS. 4 and 5 are exemplary views showing a first point and a second point according to an embodiment of the present disclosure.
FIGS. 6 and 7 are exemplary views showing the first point, the second point, and a third point according to an embodiment of the present disclosure.
FIG. 8 is an exemplary configuration view of the electronic device according to an embodiment of the present disclosure.
FIG. 9 is an exemplary view showing frequency characteristics according to the thickness of an antenna according to an embodiment of the present disclosure.

### [BEST MODE]

A most preferred embodiment according to the present disclosure provides a tire including a plurality of electronic devices, the tire comprising: a plurality of electronic devices disposed inside the tire; and a reader unit disposed outside the tire, wherein at least one of the electronic devices is disposed at any one of an inner portions, an inner surface, and an outer surface of a sidewall of the tire, and at least another one of the electronic devices is disposed on an inner liner surface of the tire.

### [DETAILED DESCRIPTION]

Hereinafter, the present disclosure will be described with reference to the accompanying drawings. However, the present disclosure may be embodied in various different forms and, therefore, is not limited to the embodiments described herein. In the drawings, portions irrelevant to the description are omitted in order to clearly describe the present disclosure, and like reference numerals are assigned to like parts throughout the specification.

Throughout the specification, when a part is described as being "connected (joined, contacted, or coupled)" to another part, this includes not only the case of being "directly connected" but also the case of being "indirectly connected" with another member interposed therebetween. In addition, when a part is described as "including" a certain element, this means that the part may further include other elements rather than excluding other elements, unless specifically stated to the contrary.

The terms used herein are used merely to describe specific embodiments and are not intended to limit the present disclosure. Singular expressions include plural expressions unless the context clearly indicates otherwise. In this specification, terms such as "include" or "have" are intended to specify the presence of a feature, a number, a step, an operation, an element, a part, or a combination thereof described in the specification, and should be understood not to preclude in advance the presence or addition of one or more other features, numbers, steps, operations, elements, parts, or combinations thereof.

In addition, terms such as "...part (unit)" and "...module" described in the specification refer to a unit that processes at least one function or operation, which may be implemented as hardware, software, or a combination of hardware and software.

In addition, in this specification, when a step is described as being located "before" or "after" another step, this includes not only the case in which a step is in a direct chronological relationship with another step, but also the case of an indirect chronological relationship in which the chronological order of two steps may be changed, such as a mixing step performed after each step.

Hereinafter, embodiments of the present disclosure will be described in detail with reference to the accompanying drawings.

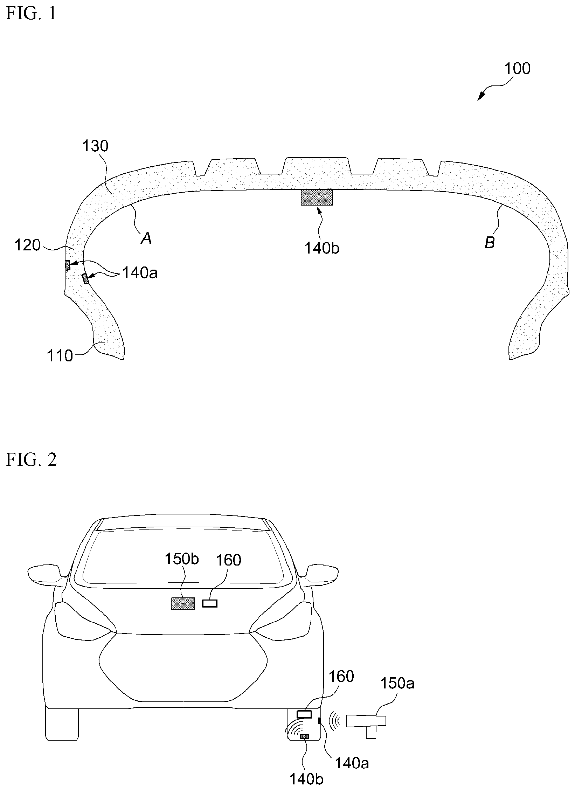

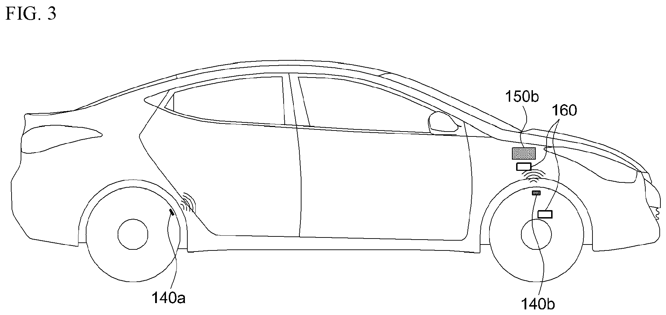

FIG. 1 is an exemplary view of an electronic device according to an embodiment of the present disclosure, and FIGS. 2 and 3 are exemplary views showing positions of the electronic device and a reader unit according to an embodiment of the present disclosure.

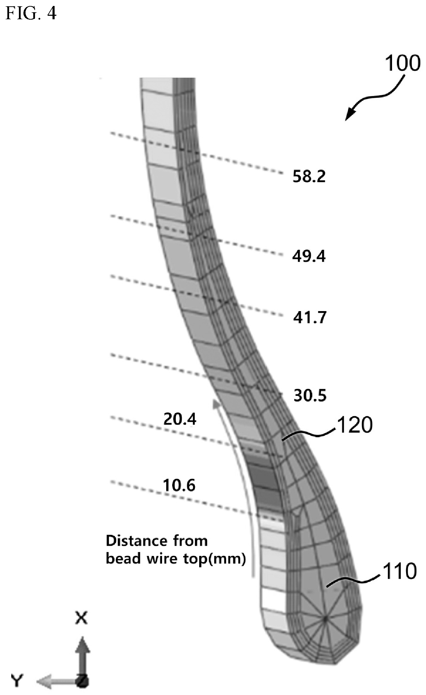

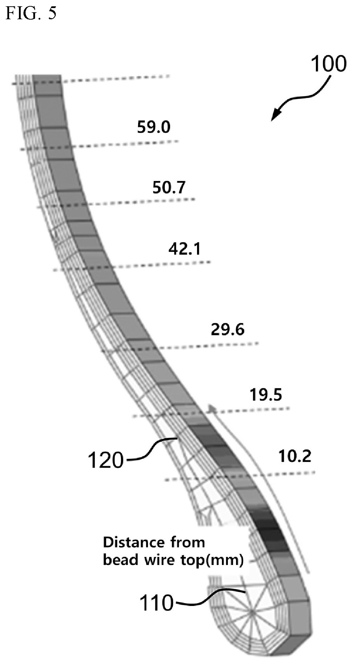

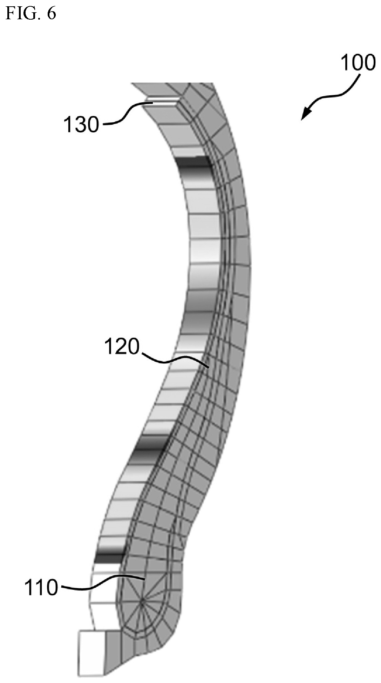

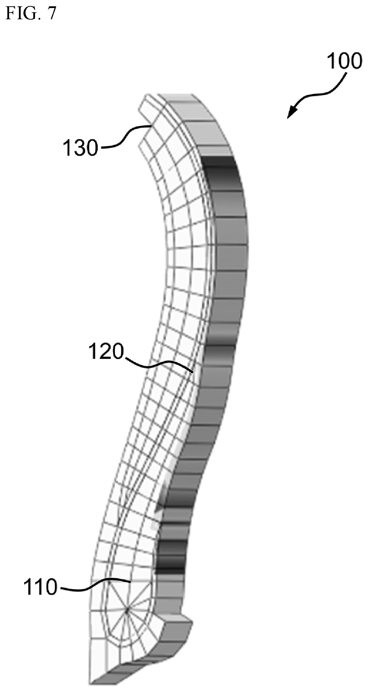

FIGS. 4 and 5 are exemplary views showing a first point and a second point according to an embodiment of the present disclosure, and FIGS. 6 and 7 are exemplary views showing the first point, the second point, and a third point according to an embodiment of the present disclosure.

Referring to FIGS. 1 to 7, a tire 100 according to the present disclosure may be provided to have a plurality of electronic devices 140.

At least one of the plurality of electronic devices 140 may be disposed at any one of an inner portions, an inner surface, and an outer surface of a sidewall of the tire 100, and at least another one of the electronic devices 140 may be disposed on an inner liner surface of the tire 100.

As one example, a first electronic device 140a may be disposed at any one of the inner portions, the inner surface, and the outer surface of the sidewall.

In addition, the tire 100 may be provided to have a first point 110 where a bead wire meets bead wire rubber, a second point 120 corresponding to an end of a bead filler, and a third point 130 corresponding to ends of a carcass and a belt.

The first electronic device 140a may be attached to the interior of the tire 100 while being positioned between the first point 110 and the second point 120 or between the second point 120 and the third point 130.

Specifically, when the first electronic device 140a is positioned between the first point 110 and the second point 120, the first electronic device 140a may be positioned at a position corresponding to 10% to 80% of the length from the first point 110 to the second point 120, starting from the first point 110.

When the first electronic device 140a is positioned between the second point 120 and the third point 130, the first electronic device 140a may be positioned at a position corresponding to 15% to 95% of the length from the second point 120 to the third point 130, starting from the second point 120.

Alternatively, the first electronic device 140a may be attached to or embedded in the sidewall, and may be provided within a range between a position 40 mm from the first point 110, which is the end of the bead wire, and the third point 130, which is the end of a second belt.

In addition, the first electronic device 140a may be installed at a position corresponding to 110% to 150% of the total length of the bead filler with respect to the second point 120. Further, the first electronic device 140a may be installed at a position 41 to 60 mm toward the belt from the first point 110.

The first electronic device 140a may be provided so as not to be inserted beyond a point corresponding to 1/2 of the total length of the sidewall from the end of the sidewall.

A second electronic device 140b, which is another electronic device disposed on the inner liner surface of the tire 100, may be disposed between both shoulder portions.

More specifically, when a point at which a straight line drawn from one end of a first belt inserted in a tread of the tire 100 to the inner liner surface meets the inner liner is defined as a fourth point A, and a point at which a straight line drawn from the other end of the first belt to the inner liner surface meets the inner liner is defined as a fifth point B, the second electronic device 140b may be disposed between the fourth point A and the fifth point B.

The electronic device 140 provided as described above may be molded and integrated with the tire 100 while positioned inside the tire 100, or may be attached to the interior of the tire 100.

Specifically, the electronic device 140 may be mounted inside the tire 100, topped with a rubber patch of the same material as the inner liner, and molded so as to be integrated with the tire 100. However, the electronic device 140 may also be attached alone to the interior of the tire 100 without rubber topping.

In particular, each of the plurality of electronic devices 140 may be installed at a point where stress is minimized within its respective prescribed installation range. More specifically, the electronic devices 140 may be provided such that the first electronic device 140a and the second electronic device 140b are each installed, within the respective limited positions, at a position where the tire radio frequency constant, the secondary tire radio frequency constant, and the stress are minimized. However, since the point where the radio frequency constant is minimized and the point where the stress is minimized may differ from each other, in such a case, the electronic device 140 may be installed at a point where the tire radio frequency constant is minimized within an allowable minimum stress range.

Meanwhile, a reader unit 150 is provided outside the tire 100 and may be configured to transmit and receive data to and from the electronic device 140.

The electronic device 140 and the reader unit 150 may be configured to transmit and receive data within a range of at least 1 to 10 cm; however, the recognition range is not limited thereto.

The reader unit 150 may be provided so as to correspond to the plurality of electronic devices 140 on a one-to-one basis.

As one example, a first reader unit 150a may be provided outside a vehicle on which the tire 100 is mounted, and may be configured to transmit and receive information to and from the first electronic device 140a. The first reader unit 150a provided as described above may be used to share information on the tire 100 with the outside of the vehicle.

In addition, a second reader unit 150b may be provided inside the vehicle on which the tire 100 is mounted, and may be configured to transmit and receive information to and from the second electronic device 140b. The second reader unit 150b provided as described above may be used to share information on the tire 100 inside the vehicle so as to notify of conditions of the tire, such as air pressure.

The tire 100 according to the present disclosure may further include a pairing unit 160 configured to pair and synchronize tire IDs or product information of the plurality of electronic devices 140.

As shown in FIGS. 2 and 3, the pairing unit 160 may be provided at a position such as the reader unit 150, a tire wheel, or the interior of the vehicle.

In addition, among the plurality of electronic devices 140, at least one may be provided as a powered type and at least one may be provided as a non-powered type.

The pairing unit 160 provided as described above may be configured to synchronize an RFID provided with a single 96-bit memory with a sensor having a plurality of memories so as to share the tire ID and synchronize the product information. In addition, the pairing unit 160 provided as described above may be configured to partition the RFID data into segments so as to provide the information to the sensor.

More specifically, the pairing unit 160 may be configured to read the tire ID of each electronic device 140, match the read tire ID of each electronic device 140 by software, and verify the matching by a method such as random number generation. Then, the pairing unit 160 may be configured to pair the tire IDs in accordance with the matching result and to record the tire ID information recorded in the non-powered electronic device 140 in the memory of the powered electronic device 140.

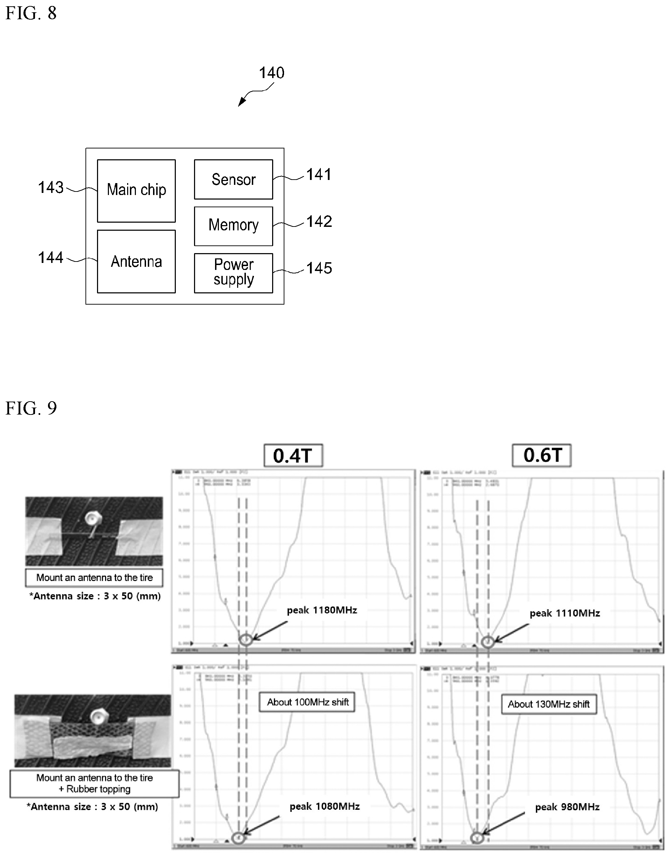

FIG. 8 is an exemplary configuration view of the electronic device according to an embodiment of the present disclosure.

Referring to FIG. 8, the electronic device 140 may include a sensor 141, a memory 142, a main chip 143, an antenna 144, and a power source 145.

The sensor 141 may be configured to collect status information on the condition of the tire.

The memory 142 may be configured to store the status information.

Specifically, the memory 142 may be configured to store the status information, a tag ID, a tire ID, and tire information, and may be provided with a plurality of storage spaces.

As one example, in the memory 142, the storage space for recording the tire ID may consist of a memory of 256 bits or less, and may include a manufacturer, item information, and a serial barcode.

In addition, among the storage spaces, a memory of 2,000 bits or less for recording additional tire information may be provided, and tire information may be additionally recorded in such storage space.

Data stored in the storage spaces of the memory 142 may be configured to use hexadecimal or binary numbers.

The main chip 143 may be configured to manage the information stored in the memory 142. In addition, the main chip 143 may be configured to transmit, to the outside through the antenna 144, externally requested information among the information stored in the memory 142. The main chip 143 may also be configured to cause information transmitted from the outside to be stored in the memory 142.

The antenna 144 may be configured to perform unidirectional or bidirectional transmission and reception of data.

The power source 145 includes a battery, an energy harvester, or the like, and may be configured to supply power to the electronic device 140 in a wired or wireless manner. However, the electronic device 140 may also be provided as a non-powered transponder without the power source 145.

The shape of the electronic device 140 provided as described above is not limited, but the electronic device 140 may be provided in a shape having at least one face of a polygon. In this case, the electronic device 140 may be provided in a plate shape such that the flat portion of the electronic device 140 and the inner liner are attached in parallel contact with each other. The present disclosure provided as described above can further reduce the risk of damage to the electronic device 140 and improve attachment stability.

As one example, the total length of the electronic device 140 may be 45 to 75 mm, and the width and the thickness thereof may be within 3 mm. Preferably, the electronic device 140 may be provided as a plate-type RFID having a width and a thickness of 0.4 to 0.6 mm.

The reader unit 150 is provided outside the tire 100 and may be configured to transmit and receive data to and from the electronic device 140.

The electronic device 140 and the reader unit 150 may be configured to transmit and receive data within a range of at least 1 to 10 cm; however, the recognition range is not limited thereto.

FIG. 9 is an exemplary view showing frequency characteristics according to the thickness of the antenna according to an embodiment of the present disclosure.

**[Table 1]**

| **Condition** | **Transmission Frequency** | **Reception Frequency** |
|---|---|---|
| In air | 1,776 MHz | 1,776 MHz |
| Electronic device topped with two rubber sheets | 1,776 MHz | 1,428 MHz |
| Electronic device only, attached to tire surface | 1,776 MHz | 1,180 MHz |
| Electronic device topped and then attached to tire surface | 1,776 MHz | 1,080 MHz |
| Embedded in tire | 1,776 MHz | 1,052 MHz |

**[Table 2]**

| **Condition** | **Transmission Frequency** | **Reception Frequency** |
|---|---|---|
| In air | 1,510 MHz | 1,510 MHz |
| Electronic device topped with two rubber sheets | 1,510 MHz | 1,214 MHz |
| Electronic device only, attached to tire surface | 1,510 MHz | 1,003 MHz |
| Electronic device topped and then attached to tire surface | 1,510 MHz | 918 MHz |
| Embedded in tire | 1,510 MHz | 894 MHz |

Referring to FIG. 9, Table 1, and Table 2, the frequency change due to rubber topping and the like and the frequency change according to the thickness of the antenna 144 can be observed. As shown, it can be seen that, even at the same transmission frequency, the greater the number of objects through which the signal must pass, the more the reception frequency decreases relative to the transmission frequency due to permittivity.

Accordingly, the electronic device 140 and the reader unit 150 may be designed such that the reception frequency becomes the target reception frequency, which is the intended frequency, and the transmission frequency may be designed to be greater than the target reception frequency.

Specifically, the transmission frequency may be designed by applying a tire radio frequency constant (TRFC) derived using, as variables, a combination of one or more of the permittivity, the compound composition, the thickness, and the number of overlapping layers of structures located on a straight line between the electronic device and the reader unit.

The tire radio frequency constant may include, as variables, the compound of the sidewall, the thickness of the sidewall, the material of the carcass cord, the compound of the carcass cord, the thickness of the carcass cord, the number of layers of the carcass cord, the compound of the bead filler, the thickness of the bead filler, the compound of the rim cushion, the thickness of the rim cushion, the compound of the inner liner, and the thickness of the inner liner.

More specifically, the tire radio frequency constant may be calculated by the following Equation 1. [Equation 1] $\begin{matrix}TRFC = α \sqrt{\left(SWC\times SWT\right)} + β \sqrt{\left(CCM\times CCC\times CCT\times CCN\right)} + γ \sqrt{\left(BFC\times BFT\right)} + \\ δ \sqrt{\left(RCC+RCT\right)} + ε \sqrt{\left(ILC\times ILT\right)}\end{matrix}$

Here, SWC denotes a compound coefficient of the sidewall, SWT denotes a thickness coefficient of the sidewall, α denotes a correction coefficient of the sidewall, CCM denotes a material coefficient of the carcass cord, CCC denotes a compound coefficient of the carcass cord, CCT denotes a thickness coefficient of the carcass cord, CCN denotes the number of overlapping layers of the carcass cord, β denotes a correction coefficient of the carcass cord, BFC denotes a compound coefficient of the bead filler, BFT denotes a thickness coefficient of the bead filler, γ denotes a correction coefficient of the bead filler, RCC denotes a compound coefficient of the rim cushion, RCT denotes a thickness coefficient of the rim cushion, δ denotes a correction coefficient of the rim cushion, ILC denotes a compound coefficient of the inner liner, ILT denotes a thickness coefficient of the inner liner, and ε denotes a correction coefficient of the inner liner.

Specifically, describing each variable, SWC is the compound coefficient of the sidewall and may be set within a range of 0 to 10. SWC may be adjusted basically in units of 0.1 according to the blending ratio of natural rubber, synthetic rubber, and other polymers of the sidewall.

SWT is the thickness coefficient of the sidewall and may be set within a range of 0 to 1. The thickness of the sidewall may be classified in a range of 2 to 100 mm and adjusted in units of 0.1.

α is the correction coefficient of the sidewall and may be determined within a range of 0 to 1 according to the shape of the sidewall. Typically, α may be set to a value of 0.7.

CCM is the material coefficient of the carcass cord and may be set within a range of 0 to 5. The material coefficient of the carcass cord may be adjusted according to the material of the carcass cord, such as nylon or steel.

CCC is the compound coefficient of the carcass cord and may be set within a range of 0 to 5. The compound coefficient of the carcass cord may be determined according to the material of the carcass topping compound.

CCT is the thickness coefficient of the carcass cord and may be set within a range of 0 to 1, classified according to the thickness of the carcass cord.

CCN is the number of overlapping layers of the carcass cord, may be classified according to the number of carcass layers from the outer surface of the sidewall to the electronic device 140, and may be set within a range of 0 to 50.

β is the correction coefficient of the carcass cord and may be set within a range of 0 to 0.2 according to the shape of the carcass cord; typically, β may be set to 0.1.

BFC is the compound coefficient of the bead filler, may be adjusted in units of 0.1 according to the rubber blending ratio, and may be set within a range of 0 to 5.

BFT is the thickness coefficient of the bead filler and may be set within a range of 0 to 1 according to the thickness of the bead filler.

γ is the correction coefficient of the bead filler and may be set within a range of 0 to 0.5 according to the shape of the bead filler; typically, γ may be set to 0.2.

RCC is the compound coefficient of the rim cushion, is adjusted in units of 0.1 according to the rubber blending ratio, and may be set within a range of 0 to 10.

RCT is the thickness coefficient of the rim cushion, is adjusted according to the thickness of the rim cushion, and may be set within a range of 0 to 1.

δ is the correction coefficient of the rim cushion and may be set within a range of 0 to 0.8 according to the shape of the rim cushion; typically, δ may be set to 0.1.

ILC is the compound coefficient of the inner liner, may be adjusted in units of 0.1 according to the type and number of inner liners, and may be set within a range of 0 to 10.

ILT is the thickness coefficient of the inner liner and may be set within a range of 0 to 1 according to the thickness of the inner liner.

ε is the correction coefficient of the inner liner and may be set within a range of 0 to 0.2 according to the shape of the inner liner; typically, ε may be set to 0.1.

Once the tire is designed, each of the correction coefficients (α, β, γ, δ, ε) is determined within the prescribed range, and may be provided to always have the same value until the tire structure is changed.

In addition, each of the correction coefficients (α, β, γ, δ, ε) may be provided to become 1.5 times or more greater than the initially set value when the electronic device 140 is positioned between the second point 120 and the third point 130.

In addition, the tire radio frequency constant may be derived by further including a correction coefficient of objects surrounding the sensor 141 and a sensor correction coefficient.

The tire radio frequency constant calculated as described above may be multiplied by the target reception frequency to obtain the transmission frequency of the electronic device 140 required for the design.

As one example, the first electronic device 140a may be designed to have a transmission frequency derived by multiplying the tire radio frequency constant by the target reception frequency, which is the intended reception frequency.

In addition, the secondary tire radio frequency constant for the second electronic device 140b may be derived by obtaining a value primarily designed by further including, as variables, the physical properties of the tread, the thickness of the tread, and the belt thickness in the existing tire radio frequency constant, and then multiplying the primarily designed value by the ratio of the reception frequency received at the reader unit 150 to the transmission frequency transmitted from the second electronic device 140b.

The second electronic device 140b may be designed to have a transmission frequency calculated by multiplying the target reception frequency by the secondary tire radio frequency constant derived as described above.

In this manner, the electronic device 140 may be provided such that the main chip 143 and the related circuits are designed to obtain the transmission frequency calculated in consideration of the tire radio frequency constant derived according to the position.

As one example, when the tire radio frequency constant is calculated to be 1.69 and the target reception frequency is 1,052 MHz, the electronic device 140 may be designed such that the transmission frequency becomes 1,776 MHz, which is the product of 1.69 and 1,052.

The reception frequency at the receiving end of the first electronic device 140a may be provided in a band of 800 to 960 MHz, and the reception frequency at the receiving end of the second electronic device 140b may be provided in a band of 300 to 450 MHz or 2.3 to 2.6 GHz.

Meanwhile, the transmission frequency may be designed to be 1.03 times or more, or 0.97 times or less, of the target reception frequency.

The electronic device 140 may be provided inside the tire 100 by any one of attachment, adhesion, insertion, and integration.

The electronic device 140 provided as described above may be linked with the tire and the outside through the steps of: reading the ID of each electronic device through a pairing tool for linkage; matching and verifying the ID of each electronic device by software and generating a random number or the like; pairing the IDs of the respective electronic devices; and recording the tire ID information recorded in the electronic device 140 in the memory.

According to the present disclosure provided as described above, since the transmission frequency of the electronic device 140 is designed in consideration of the position at which information is desired to be read, the structure of the tire, the permittivity according to the materials, and the like, an optimal recognition distance can be provided.

In addition, according to the present disclosure, since the value of the reception frequency falls within the error range of the target reception frequency, the information is not modulated (corrupted), and the reliability of the information can be improved.

Furthermore, according to the present disclosure, since the electronic device 140 is disposed at a position where stress is minimized, the possibility of damage occurring during driving can be reduced.

Although the foregoing description of the present disclosure has been made with reference to the limited drawings, it is for illustrative purposes only, and those of ordinary skill in the art to which the present disclosure pertains will understand that various modifications can readily be made into other specific forms without changing the technical spirit or essential features of the present disclosure. Therefore, the embodiments described above should be understood as illustrative in all respects and not restrictive. For example, each element described as a single type may be implemented in a distributed manner, and likewise, elements described as being distributed may be implemented in a combined form. In addition, the described techniques may be performed in an order different from the described method.

The embodiments described herein and the accompanying drawings merely illustrate part of the technical ideas included in the present disclosure. Accordingly, the scope of the present disclosure is defined by the appended claims, and all changes or modifications derived from the meaning and scope of the claims and equivalent concepts thereof should be construed as being included within the scope of the present disclosure.

### <Reference Signs>

100: Tire
110: First point
120: Second point
130: Third point
140: Electronic device
140a: First electronic device
140b: Second electronic device
141: Sensor
142: Memory
143: Main chip
144: Antenna
145: Power source
150: Reader unit
150a: First reader unit
150b: Second reader unit

## Claims

1. A tire including a plurality of electronic devices, the tire comprising:
a plurality of electronic devices disposed inside the tire; and
a reader unit disposed outside the tire,
wherein at least one of the electronic devices is disposed at any one of an inner portions, an inner surface, and an outer surface of a sidewall of the tire, and
wherein at least another one of the electronic devices is disposed on an inner liner surface of the tire.

2. The tire including a plurality of electronic devices of claim 1,
wherein a transmission frequency of the electronic device is designed to be different from a reception frequency by applying a tire radio frequency constant (TRFC) derived using, as variables, a combination of one or more of a permittivity, a compound composition, a thickness, and a number of overlapping layers of structures located on a straight line between the electronic device and the reader unit.

3. The tire including a plurality of electronic devices of claim 2,
wherein the tire radio frequency constant includes, as variables, a compound of the sidewall, a thickness of the sidewall, a material of a carcass cord, a compound of the carcass cord, a thickness of the carcass cord, a number of layers of the carcass cord, a compound of a bead filler, a thickness of the bead filler, a compound of a rim cushion, a thickness of the rim cushion, a compound of the inner liner, and a thickness of the inner liner.

4. The tire including a plurality of electronic devices of claim 3,
wherein the tire radio frequency constant is derived by the following equation: $\begin{matrix}TRFC = α \sqrt{\left(SWC\times SWT\right)} + β \sqrt{\left(CCM\times CCC\times CCT\times CCN\right)} + γ \sqrt{\left(BFC\times BFT\right)} + \\ δ \sqrt{\left(RCC+RCT\right)} + ε \sqrt{\left(ILC\times ILT\right)} ,\end{matrix}$
wherein SWC is a compound coefficient of the sidewall, SWT is a thickness coefficient of the sidewall, α is a correction coefficient of the sidewall, CCM is a material coefficient of the carcass cord, CCC is a compound coefficient of the carcass cord, CCT is a thickness coefficient of the carcass cord, CCN is the number of overlapping layers of the carcass cord, β is a correction coefficient of the carcass cord, BFC is a compound coefficient of the bead filler, BFT is a thickness coefficient of the bead filler, γ is a correction coefficient of the bead filler, RCC is a compound coefficient of the rim cushion, RCT is a thickness coefficient of the rim cushion, δ is a correction coefficient of the rim cushion, ILC is a compound coefficient of the inner liner, ILT is a thickness coefficient of the inner liner, and ε is a correction coefficient of the inner liner.

5. The tire including a plurality of electronic devices of claim 3,
wherein the transmission frequency of the electronic device is designed by multiplying a target reception frequency by the tire radio frequency constant.

6. The tire including a plurality of electronic devices of claim 3,
wherein a secondary tire radio frequency constant is calculated by multiplying a value primarily designed by further including, as variables, physical properties of a tread, a thickness of the tread, and a belt thickness in the tire radio frequency constant, by a ratio of the reception frequency received at the reader unit to the transmission frequency transmitted from the electronic device.

7. The tire including a plurality of electronic devices of claim 6,
wherein the transmission frequency of the electronic device disposed on the inner liner surface of the tire is designed by multiplying a target reception frequency by the secondary tire radio frequency constant.

8. The tire including a plurality of electronic devices of claim 1,
further comprising a pairing unit configured to pair and synchronize tire IDs or product information of the plurality of electronic devices,
wherein the electronic device is installed at a position of the tire where a tire radio frequency constant is within a preset target range.

9. The tire including a plurality of electronic devices of claim 8,
wherein the plurality of electronic devices are configured to store and transmit at least one of a manufacturer, product information, and a serial number among tire information, and
wherein the plurality of electronic devices are configured to share at least one or more information among the tire information.

10. The tire including a plurality of electronic devices of claim 1,
wherein a point where a bead wire meets bead wire rubber is defined as a first point, a point corresponding to an end of a bead filler is defined as a second point, and a point corresponding to ends of a carcass and a belt is defined as a third point,
when the electronic device is installed and positioned between the first point and the second point, at a position corresponding to 10% to 80% of a length from the first point to the second point, starting from the first point, and
when the electronic device is installed and positioned between the second point and the third point, at a position corresponding to 15% to 95% of a length from the second point to the third point, starting from the second point.

11. The tire including a plurality of electronic devices of claim 1,
wherein a point at which a straight line drawn from one end of a first belt to the inner liner surface meets the inner liner is defined as a fourth point, and a point at which a straight line drawn from the other end of the first belt to the inner liner surface meets the inner liner is defined as a fifth point,
when the electronic device disposed on the inner liner surface of the tire is positioned between the fourth point and the fifth point.

12. The tire including a plurality of electronic devices of claim 1,
wherein a reception frequency of the electronic device located at any one of the inner portions, the inner surface, and the outer surface of the sidewall of the tire is provided in a band of 800 to 960 MHz, and
wherein a reception frequency of the electronic device located at the inner liner surface of the tire is provided in a band of 300 to 450 MHz or 2.3 to 2.6 GHz.

13. The tire including a plurality of electronic devices of claim 2,
wherein the transmission frequency is designed to be 1.03 times or more, or 0.97 times or less, of a target reception frequency that is an intended reception frequency.
